# EUROPEAN PATENT APPLICATION

(11) **EP 2 571 080 A1**
(43) Date of publication of application: **20.03.2013**
(21) Application number: 10851363.1
(22) Date of filing: 10.05.2010
(51) Int. Cl.: H01M 2/20, H01M 2/02, H01M 2/24

(54) **BATTERY, BATTERY ELEMENT, BATTERY CASING, BATTERY MANUFACTURING METHOD, AND VEHICLE PROVIDED WITH BATTERY**

(71) Applicant: TOYOTA JIDOSHA KABUSHIKI KAISHA, Toyota-shi, Aichi-ken, 471-8571 (JP)
(72) Inventor: OKUMURA Motoyoshi, Toyota-shi, Aichi 471-8571 (JP); IBE Eiichi, Toyota-shi, Aichi 471-8571 (JP)
(74) Representative: TBK
(86) International application number: PCT/JP2010/057853
(87) International publication number: WO 2011/141978

(57) **Abstract**

A battery includes a battery element having positive and negative electrode plates and separators for insulating these electrode plates, and a battery case provided with a plurality of storing cavities divided by partitions for accommodating battery elements, each of the storing cavities of the battery case accommodating a battery element. The battery element has a positive current collector plate connected to the positive electrode plates and a negative current collector plate connected to the negative electrode plates on side faces on opposite sides from each other. Part of the positive and negative current collector plates respectively form a protruded portion protruding from an area along the side face of the battery element in an opposite direction from a bottom side of the storing cavities of the battery case. The partitions of the battery case are formed with a respective hole within an area facing the protruded portions of the positive and negative current collector plates, with the current collector plates of adjacent battery elements being connected to each other through the hole. A projection maintaining a distance between the partition and the current collector plate is formed at a position within an area between the hole and a connecting portion between the current collector plate and the electrode plates, at least on one of the partition and the current collector plate.

## Description

### TECHNICAL FIELD

The present invention relates to a battery formed by a plurality of battery elements accommodated in respective storing cavities of a battery case and connected to each other. More specifically, it relates to a battery in which current collector plates of two battery elements encased in adjacent storing cavities of the battery case are connected to each other; to the battery element, battery case, battery production method, and a vehicle having the battery mounted thereon.

### BACKGROUND ART

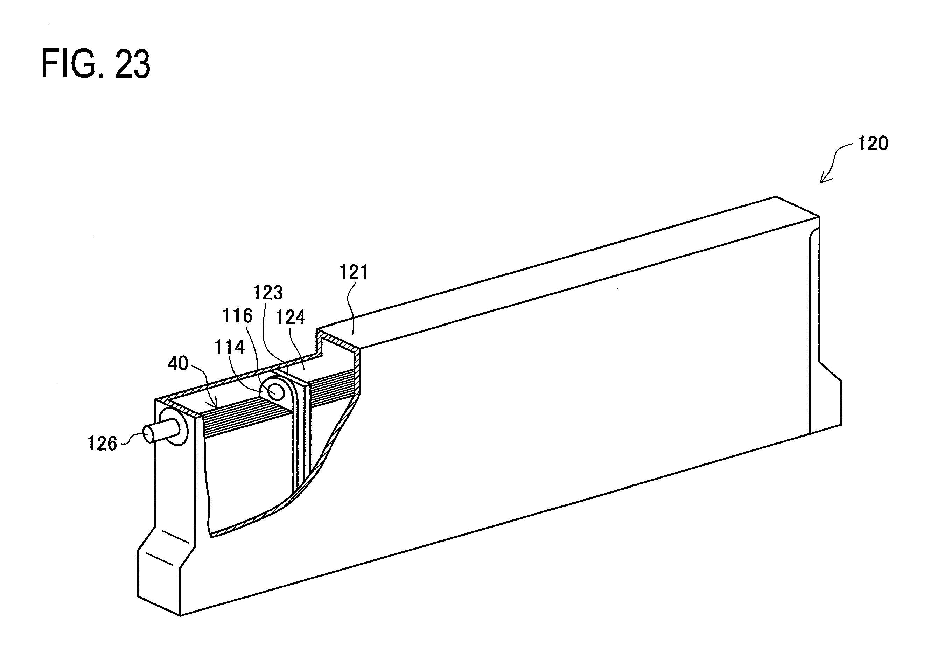

Conventionally, a battery pack mounted on a hybrid electric vehicle or the like is known, which has a plurality of battery elements connected to each other in series to be able to supply high power (see, for example, Patent Documents 1 and 2). A battery pack 100 described in these literatures is formed by a combination of a plurality of battery modules 120 as shown in FIGS. 23 to 25. Each of the battery modules 120 includes a plurality of battery elements assembled therein.

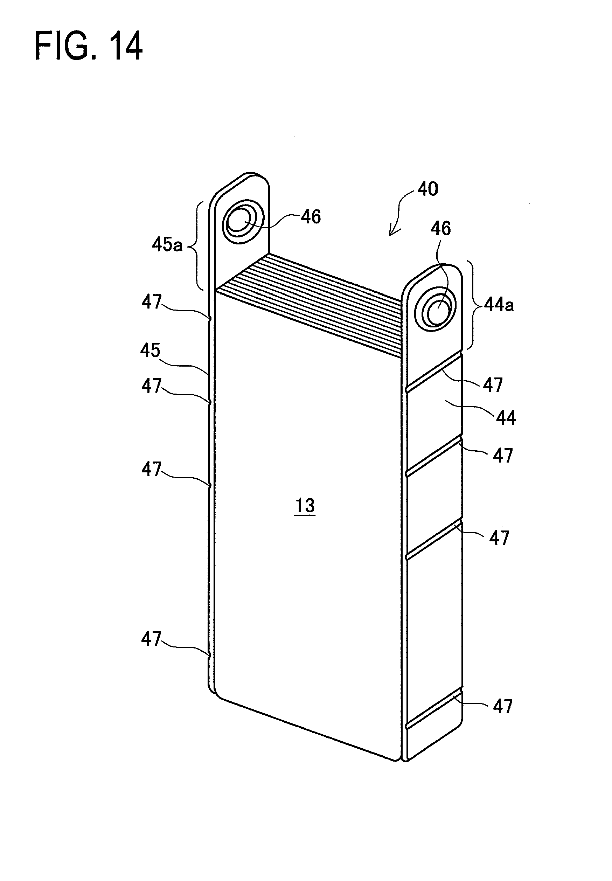

A conventionally used battery element assembled in the battery module 120 is shown in FIG. 14. This battery element 40 includes an electrode body 13 formed by stacked positive and negative electrode plates and current collector plates 44 and 45 respectively disposed on both side faces of the electrode body 13. The overall shape of the element 40 is flat and generally rectangular parallelepiped. End portions of all the plurality of positive electrode plates contained in the electrode body 13 are connected by welding to one current collector plate 44. End portions of all the plurality of negative electrode plates contained in the electrode body 13 are connected by welding to the other current collector plate 45. Ends of the current collector plates 44 and 45 protrude from the electrode body 13 upwards in the drawing, with connecting portions 46 which are generally circular protrusions being provided on an outer surface of the protruded portions.

The battery module 120 is formed by a plurality of battery elements 40 sealed inside a battery case 121, as shown in FIG. 23. The interior of the battery case 121 is divided into a plurality of storing cavities 124 by partitions 123, each storing cavity 124 accommodating one battery element 40 respectively. The battery module 120 shown in this drawing has a flat shape in which six battery elements 40 are arranged so that their larger side faces are coplanar with one another.

Adjacent storing cavities 124 respectively accommodate a battery element 40, adjacent current collector plates 44 and 45 being connected at the connecting portions 46. For this purpose, the partitions 123 of the battery case 121 are formed with a circular hole 125 such as to match the position and size of the connecting portions 46 of respective current collector plates 44 and 45. Namely, in the battery module 120 shown in FIG. 23, the connecting portions 46 of adjacent battery elements 40 are connected to each other though the circular hole 125. Further, external terminals 126 are provided to both end faces in the longitudinal direction of the battery case 121.

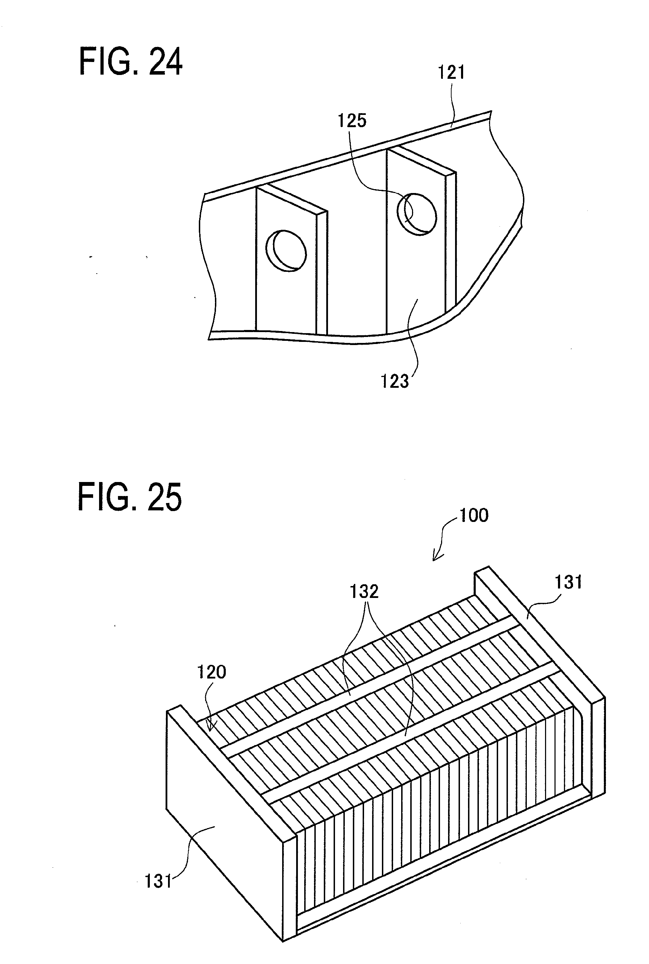

The battery pack 100 is formed by arranging and assembling a plurality of battery modules 120 into one piece as shown in FIG. 25. The battery modules 120 are arranged with their flat surfaces facing to each other such that the front and back sides are arranged alternately and oppositely, and binding plates 131 are respectively disposed at both ends of the battery modules. The binding plates 131 are bound to each other using binding rods 132 to bind the battery modules 120 together. Further, the external terminals 126 of the battery modules 120 are connected to each other so that the modules as a whole can function as one battery that can supply high power.

### RELATED ART DOCUMENTS

### PATENT DOCUMENTS

[Patent Document 1] JP 2005-149837A
[Patent Document 2] JP 2008-4289A

### DISCLOSURE OF THE INVENTION

### PROBLEMS TO BE SOLVED BY THE INVENTION

However, in producing the conventional battery module 120, it is necessary to bring the connecting portions 46 of battery elements 40 on both sides of the partition 123 of the battery case 121 into contact with each other through the circular hole 125 in the partition. Because of this, after the battery elements 40 have been inserted into the storing cavities 124, the current collector plates 44 and 45 of the battery elements 40 on both sides are subjected to a force applied in directions in which they are both separated from the electrode body 13. This would cause stress applied to weld points between the current collector plates 44 and 45 and the electrode body 13. In some cases, the electrode body 13 could be wrinkled, broken, or otherwise damaged.

The present invention was devised to solve the problem in the production process of the conventional battery described above. Namely, it is an object of the invention to provide a battery that allows for connection of current collector plates of adjacent battery elements without damaging the electrode body, and the battery element, a battery case, a method for producing the battery, and a vehicle having the battery mounted thereon.

### MEANS FOR SOLVING THE PROBLEMS

To achieve the above objects, one aspect of the invention provides a battery comprising: a battery element having positive and negative electrode plates and separators for insulating these electrode plates; and a battery case provided with a plurality of storing cavities divided by partitions for accommodating battery elements, each of the storing cavities of the battery case accommodating a battery element, wherein the battery element has a positive current collector plate connected to the positive electrode plates and a negative current collector plate connected to the negative electrode plates on side faces on opposite sides from each other, part of the positive and negative current collector plates respectively form a protruded portion protruding from an area along the side face of the battery element in an opposite direction from a bottom side of the storing cavities of the battery case, the partitions of the battery case are formed with a respective hole within an area facing the protruded portions of the positive and negative current collector plates, with the current collector plates of adjacent battery elements being connected to each other through the hole, and a projection maintaining a distance between the partition and the current collector plate is formed at a position within an area between the hole and a connecting portion between the current collector plate and the electrode plates, at least on one of the partition and the current collector plate.

With the battery according to the aspect described above, the projection maintains the distance between the partition and the current collector plate. Therefore, in the process of connecting current collector plates of adjacent battery elements to each other through the hole, even when the current collector plates are respectively subjected to a force in directions away from respective electrode plates, the electrode plates are not adversely affected. The battery thus allows for connection of current collector plates of adjacent battery elements to each other without damaging the electrode body.

In the above aspect of the present invention, preferably, the projection is formed to the current collector plate, with its height gradually increasing from a side near the connecting portion toward a side near the hole.
With the projection formed like this, it is unlikely to inhibit the insertion of the battery element into the battery case.

In the above aspect of the present invention, preferably, the projection is formed to the partition, with its height gradually increasing from a side near the hole toward a side near the connecting portion.
With the projection formed like this, it is also unlikely to inhibit the insertion of the battery element into the battery case.

Another aspect of the present invention provides A battery element having positive and negative electrode plates and separators for insulating these electrode plates, wherein the battery element includes a positive current collector plate connected to the positive electrode plates and a negative current collector plate connected to the negative electrode plates on side faces on opposite sides from each other, part of the positive and negative current collector plates respectively forms a protruded portion protruding from an area along the side face of the battery element in the same direction, the protruded portion is provided with an inter-battery connecting portion for connection with a current collector plate of another battery element, the current collector plate is formed with a projection protruding in a direction away from the electrode plates at a position within an area between the inter-battery connecting portion and a connecting portion between the current collector plate and the electrode plates.
After the battery element of the aspect described above has been inserted into the battery case, the projection maintains a distance between the partition and the current collector plate.

In the above aspect of the present invention, preferably, the projection has a height gradually increasing from a side near the connecting portion toward a side near the inter-battery connecting portion.

Another aspect of the present invention provides a battery case provided with a plurality of storing cavities divided by partitions, each of the storing cavities being configured to accommodate a battery element to form a battery, the battery element including a positive current collector plate and a negative current collector plate respectively connected to positive and negative electrode plates on side faces on opposite sides from each other, part of these current collector plates forming a protruded portion protruding in the same direction, and the battery element being accommodated such that the protruded portion is oriented oppositely from a bottom side of the battery case, wherein the partitions are formed with a respective hole for connection between current collector plates of adjacent battery elements to each other within an area which will face the protruded portions of the positive and negative current collector plates of the battery elements to be accommodated in the storing cavities, and the partitions are formed with respective projections protruding from the partitions toward inside of the storing cavities at a position within an area between the hole and a portion that will face a connecting portion between the current collector plate and the electrode plates when the battery elements are accommodated in the storing cavities.
After the battery element has been inserted into the battery case of the aspect described above, the projection maintains a distance between the partition and the current collector plate.

In the above aspect of the present invention, preferably, the projection has a height gradually increasing from a side near the hole toward a side near the portion facing the connecting portion.

Another aspect of the present invention provides a method for producing a battery involving insertion of battery elements having positive and negative electrode plates and separators for insulating these electrode plates into respective storing cavities of a battery case provided with a plurality of storing cavities divided by partitions for accommodating battery elements to produce a battery, wherein the battery element used herein is a battery element including a positive current collector plate connected to the positive electrode plates and a negative current collector plate connected to the negative electrode plates on side faces on opposite sides from each other, part of the positive and negative current collector plates respectively forming a protruded portion protruding from an area along the side face of the battery element in the same direction, the protruded portion being provided with an inter-battery connecting portion for connection with a current collector plate of another battery element, the battery case used herein is a battery case in which the partitions are formed with a respective hole for connection between inter-battery connection portions of adjacent battery elements to each other within an area that will face the protruded portions of the positive and negative current collector plates when the battery elements are accommodated in the storing cavities, projections for maintaining a distance between the partition and the current collector plate are formed at least at one of a position on the partitions of the battery case used herein within an area between the hole and a portion that will face a connecting portion between the current collector plate and the electrode plates when the battery elements are accommodated in the storing cavities, and a position on the battery elements herein used within an area between the connecting portion between the current collector plate and the electrode plates and the inter-battery connecting portion, and the method comprises: inserting the battery elements into respective storing cavities of the battery case from a side opposite from the protruded portions; and connecting the inter-battery connecting portions of adjacent battery elements to each other via the partitions through the holes of the battery case.

In the above aspect of the present invention, preferably, the method uses a battery element having projections formed on the current collector plates with a height gradually increasing from a side near the connecting portion toward a side near the inter-battery connecting portion.

In the above aspect of the present invention, preferably, the method uses a battery element having projections formed on the current collector plates with a height gradually increasing from a side near the connecting portion toward a side near the inter-battery connecting portion.

Further, another aspect of the invention provides a vehicle having one of the aforementioned batteries mounted thereon.

### EFFECTS OF THE INVENTION

According to the aforementioned battery, battery element, battery case, battery production method, and vehicle having battery mounted thereon, it is possible to connect current collector plates of adjacent battery elements to each other without damaging respective electrode bodies.

### BRIEF DESCRIPTION OF THE DRAWINGS

FIG. 1 is a partial cross sectional view showing a battery module in a first embodiment;
FIG. 2 is a perspective view of a battery element in the first embodiment;
FIG. 3 is an explanatory view showing a configuration of an electrode body of the battery element;
FIG. 4 is a perspective view showing a part of a current collector plate;
FIG. 5 is an explanatory view showing an example of the shape of a projection;
FIG. 6 is an explanatory view showing another example of the shape of a projection;
FIG. 7 is an explanatory view showing another example of the shape of a projection;
FIG. 8 is an explanatory view showing another example of the shape of a projection;
FIG. 9 is an explanatory view showing another example of the shape of a projection;
FIG. 10 is an explanatory view showing a relationship between a battery case and the battery element;
FIG. 11 is an explanatory view showing a relationship between a partition of the battery case and a current collector plate of the battery element;
FIG. 12 is a cross sectional view of a partition of a battery case;
FIG. 13 is a partial cross sectional view of a battery module in a second embodiment;
FIG. 14 is a perspective view showing an example of a battery element in the second embodiment;
FIG. 15 is a partial perspective view of a partition of a battery case in the second embodiment;
FIG. 16 is an explanatory view showing an example of the shape of a projection;
FIG. 17 is an explanatory view showing another example of the shape of a projection;
FIG. 18 is an explanatory view showing another example of the shape of a projection;
FIG. 19 is an explanatory view showing another example of the shape of a projection;
FIG. 20 is an explanatory view showing another example of the shape of a projection;
FIG. 21 is a cross sectional view of a partition of a battery case in the battery module in the second embodiment;
FIG. 22 is an explanatory view showing a vehicle using the battery module in the first and second embodiments;
FIG. 23 is a partial cutaway view showing a conventional battery module;
FIG. 24 is an explanatory view showing an example of a conventional battery case; and
FIG. 25 is a perspective view showing en example of a conventional battery pack.

### MODE FOR CARRYING OUT THE INVENTION

### <First Embodiment>

Hereinafter, a first embodiment of the present invention will be described in detail with reference to the accompanying drawings. In this embodiment, the present invention is applied to a battery pack having battery modules, each module accommodating a plurality of battery elements in respective storing cavities of a battery case.

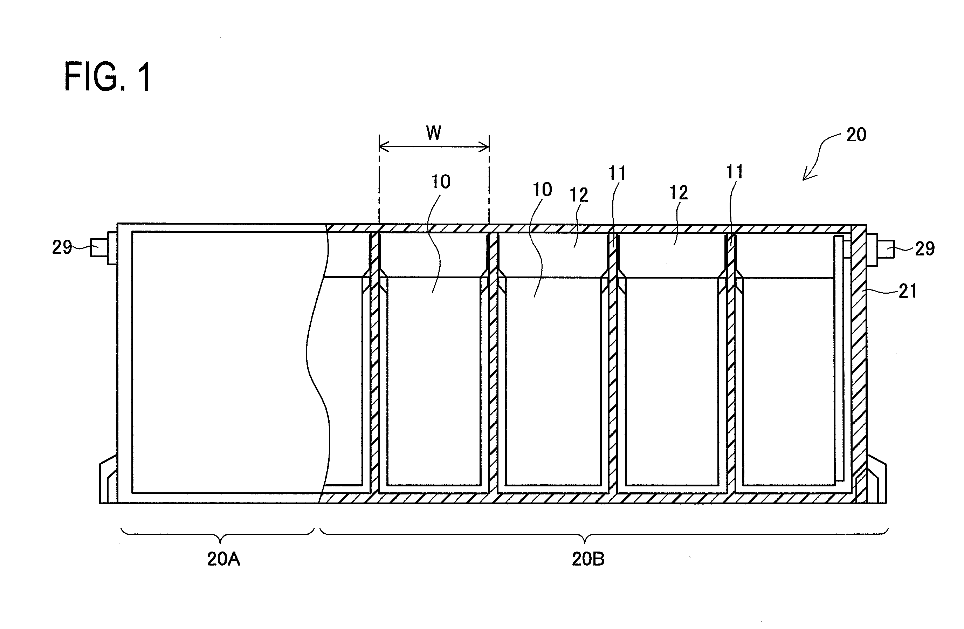

The battery pack of this embodiment includes a plurality of battery modules 20 shown in FIG. 1 stacked upon one another and bound together. This battery module 20 is formed by a plurality of battery elements 10 accommodated in a battery case 21 with liquid electrolyte. Namely, the battery case 21 has a plurality of storing cavities 12 divided from each other by partitions 11, each storing cavity 12 accommodating one each battery element 10.

Note that part of the battery case 21 of the battery module 20 is cut away in FIG. 1 to show its inside. A part 20A on the left side of the drawing shows the outer appearance of the battery case 21, while a part 20B on the right side of the drawing shows inside, with the front side of the container being cut away. The battery module 20 of this embodiment has generally the same outer appearance as the conventional battery module 120 shown in FIG. 23. The battery modules 20 are assembled and bound together into the battery pack in the same manner as the conventional battery pack 100. Accordingly, the battery pack of this embodiment has the same shape as the conventional battery pack 100 shown in FIG. 25.

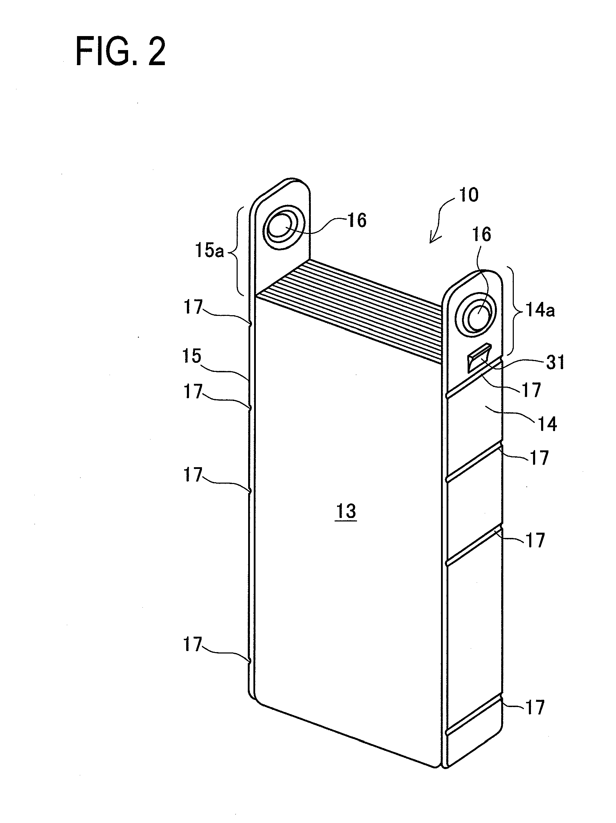

The battery element 10 of this embodiment has an electrode body 13 and current collector plates 14 and 15 arranged on both sides of the electrode body as shown in FIG. 2. As a whole, it has a flat, generally rectangular parallelepiped shape. Upper ends in FIG. 2 of the current collector plates 14 and 15 form protruded portions 14a and 15a protruding from the electrode body 13 in the same direction (upwards in the drawing). The protruded portions 14a and 15a are provided with a respective connecting portion 16. The connecting portion 16 is a generally circular protrusion protruding from the outer surface of the current collector plates 14 and 15 outwards. This connecting portion 16 is the part connected to a connecting portion 16 of another battery element 10 as will be described later, i.e., it corresponds to the inter-battery connecting portion.

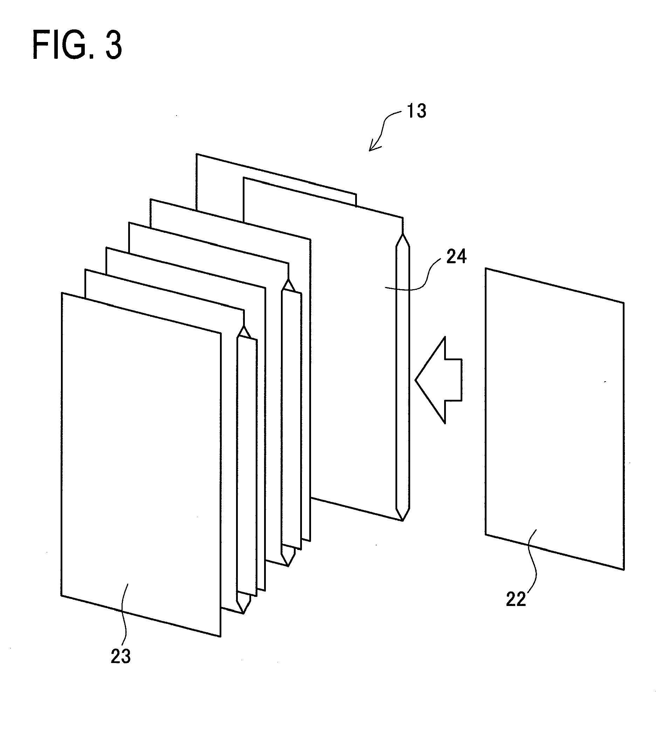

The electrode body 13 includes positive electrode plates 22 inserted in bag-shaped separators 24 with one open side, and negative electrode plates 23, as shown in FIG. 3. These electrode plates are alternately stacked upon one another. All the separators 24 have their openings oriented on one side of the electrode body 13 where the current collector plate 14 is disposed. While the current collector plate 14 is connected to ends of all the positive electrode plates 22 at four weld points 17, it is not connected to the negative electrode plates 23. The current collector plate 15 is connected to ends of all the negative electrode plates 23, but not connected to the positive electrode plates 22. The weld points 17 appear as strips in FIG. 2 parallel to the stacking direction of the electrode body 13 at four points within the area where the current collector plates 14 and 15 are in contact with the side faces of the electrode body 13. These weld points 17 are the connecting portions between the current collector plates and electrode plates.

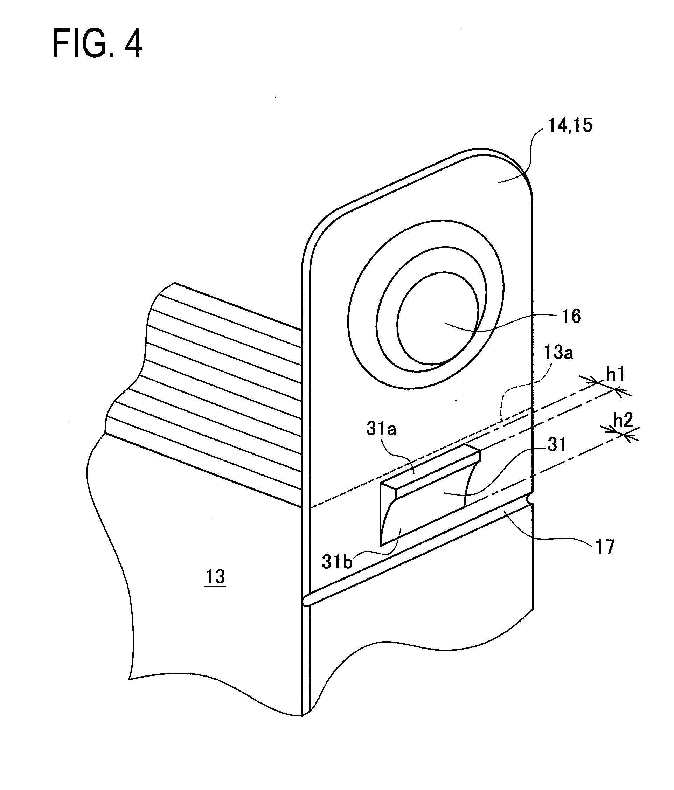

Further, in this embodiment, as shown in FIG. 4, a projection 31 protruding in a direction away from the electrode body 13 is formed between the connecting portion 16 and the nearest weld point 17 on the current collector plates 14 and 15. Namely, the projection 31 is positioned above the uppermost weld point 17 in FIG. 2 and below the connecting portion 16. Note, however, that it is preferable that the most protruded portion of the projection 31 be positioned within the area facing the electrode body 13. The projection 31 is preferably disposed in the middle in the width direction of the current collector plates 14 and 15 (thickness direction of the electrode body 13). The projection 31 preferably has a size in the width direction that is more than one tenth of the width of the current collector plates 14 and 15.

Furthermore, the projection 31 has different protruding heights in the direction away from the electrode body 13, as shown in FIG. 4, between one on the side 31a near the connecting portion 16 and the other on the side 31 b near the weld point 17. It is higher (height h1 in the drawing) on the side 31a near the connecting portion 16, and lower (height h2 in the drawing) on the side 31b near the weld point 17. In the example of this drawing, the height h2 on the side 31 b near the weld point 17 is almost zero. The broken line 13a in the drawing represents a line that indicates the position of the upper face in the drawing of the electrode body 13. In this embodiment, the entire projection 31 is disposed below the broken line 13a in the drawing.

This battery element 10 is accommodated in the storing cavity 12 of the battery case 21 when in use as shown in FIG. 1. That is, the battery element 10 is required to have an entire size, even with the projection 31, within a range that allows itself to be inserted into the storing cavity 12 of the battery case 21. There is thus a limit to the height h1 of the highest portion of the projection 31. Namely, the sum of the width of the electrode body 13 and the thickness of the current collector plates 14 and 15 including the projections 31 must be less than the inner size W (see FIG. 1) of the storing cavity 12.

The projection 31 of this embodiment is made of the same material as and formed uniformly with the current collector plates 14 and 15. In this embodiment, when producing the current collector plates 14 and 15, they are formed initially in a shape that includes this projection 31. For this purpose, the mold used for producing the current collector plates 14 and 15 has a shape that includes the projection 31.

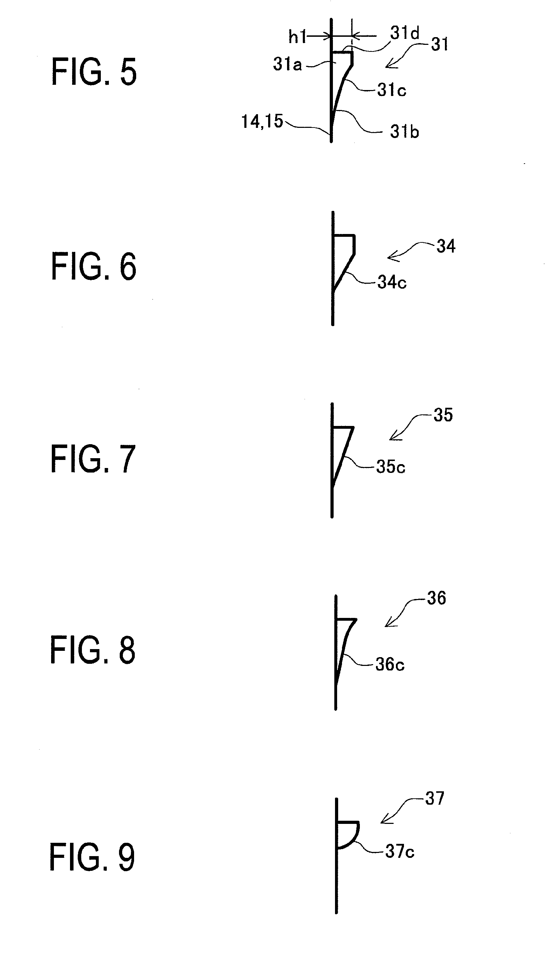

It should be noted that the shape of the projection 31 is not restricted to the one shown in FIG. 4. FIGS. 5 to 9 show examples of shapes of this projection 31 viewed from the left hand side closer to the reader of FIG. 4. FIG. 5 shows the shape of the projection 31 of FIG. 4. The upper part in FIG. 5 is the connecting portion side 31a, while the lower part is the weld point side 31b. The vertical line on the left side of the drawing indicates the surface of the current collector plate 14 or 15. A slope portion 31 c is formed as a concave curved surface concave toward the current collector plate. While the connecting portion side 31a is depicted to have a flat end face 31 d perpendicular to the current collector plate in the drawing, the end face is not restricted to this and may have, for example, a convex or concave shape.

The example of FIG. 6 is a square pillar projection 34 having a trapezium cross section. The slope portion 34c of this example has a flat surface. The example of FIG. 7 is a triangular pillar projection 35. The projection 36 of FIG. 8 has a concave surface for its slope portion 36c instead of the slope portion 35c of the example of FIG. 7. The example of FIG. 9 is a projection 37 with a circular-sector cross section, i.e., a segment of a circular pillar split in four. The slope portion 37c may have a convex surface outwardly convex from the current collector plate 14 or 15 as in this example. All the examples of projections 31 and 34-37 of FIGS. 5 to 9 have one feature in common: that they have an increasing height from the current collector plates 14 and 15 from the side of the weld point 17 (lower side of each drawing) toward the side of the connecting portion 16 (upper side of each drawing). The current collector plates 14 and 15 may be provided with projections having different shapes.

So far the projections 31 and 34-37 have been described as being given alone. However, the number of the projections is not restricted to one and a plurality of projections 31 and 34-37 with a smaller width and the same height may be equally spaced in the width direction of the current collector plates 14 and 15. In this case, the sum of the size in the width direction of respective projections 31 and 34-37 is preferably more than one tenth of the width of the current collector plates 14 and 15.

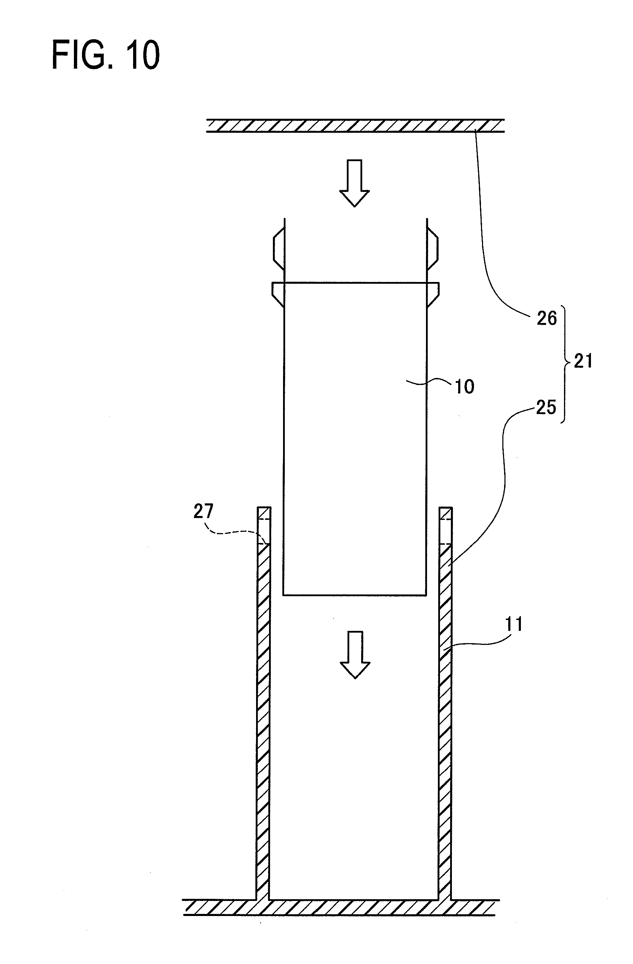

The battery case 21 of this embodiment has a plurality of storing cavities 12 divided from each other by partitions 11 as shown in FIG. 1. Before the battery elements 10 are inserted, however, the battery case 21 is separated to a main body 25 and a lid 26 as shown in FIG. 10. The partitions 11 are provided with through holes 27 as with the conventional case (see FIG. 24).

Next, a production method wherein the battery elements 10 of this embodiment are inserted into such a battery case 21 to obtain a battery module 20 will be described. In this embodiment, as shown in FIG. 10, each battery element 10 is inserted in between partitions 11 of the main body 25. After that, the lid 26 is placed over the main body 25 and the case is tightly sealed by welding.

When inserting the battery element 10 into the battery case 21 in this manner, the side farther from the connecting portion 16 (lower side in FIG. 2) is inserted first as the leading end downward from above in FIG. 1. Therefore, the projection 31 is formed at a position facing to a rearmost portion in the insertion direction of the electrode body 13. The height of the projection 31 is gradually increased backwards from the front in the insertion direction as described above. Therefore, the provision of the projection 31 does not make the insertion particularly difficult.

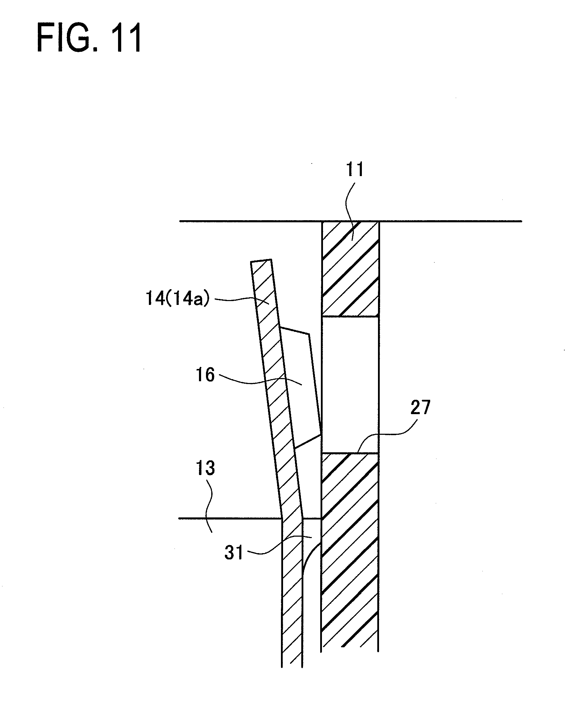

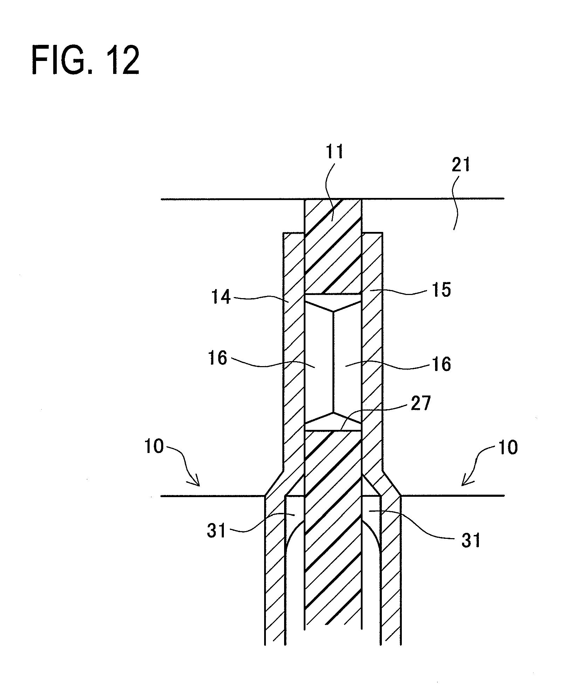

The protruded portion 14a (see FIG. 2) of the current collector plate 14 of the battery element 10 is slightly bent toward the electrode body 13 as shown in FIG. 11 before the battery element is inserted into the main body 25. This is done because the connecting portion 16 is formed in a size that protrudes outwardly from the inner size W (see FIG. 1) of the storing cavity 12 when the current collector plate 14 is upright. The same goes with the current collector plate 15. The current collector plate 14 of the battery element 10 inserted into the main body 25 is then pulled closer and connected, inside the through hole 27, to the current collector plate 15 of the battery element 10 inserted in an adjacent storing cavity as shown in FIG. 12.

In this embodiment, respective connecting portions 16 of battery elements 10 inserted on both sides of a partition 11 are welded together by resistance welding inside the through hole 27. In performing this resistance welding, since the connecting portions 16 are pressed against each other, the current collector plates 14 and 15 are respectively subjected to a force in directions away from the electrode body 13. In this embodiment, since the projections 31 are provided to the current collector plates 14 and 15, they receive this force during the welding. Accordingly, the electrode body 13 is not subjected to any additional force at least in the area below the projections 31 in FIG. 1, so that the electrode body 13 is unlikely to be damaged. The protruded portion 14a of the current collector plate 14 shown in FIG. 11 is then bent as shown in FIG. 12.

The battery elements 10 inserted into the storing cavities 12 at both left and right ends in FIG. 1 are slightly different from the one shown in FIG. 2. This is because the external terminals 29 are provided at both ends of the battery case 21 and the connection between these portions and current collector plates is done in a different manner from that between battery elements 10. Namely, the battery element at the right end in FIG. 1 is provided with a current collector plate for connection with the external terminal 29 instead of the current collector plate 15 of the battery element 10 of FIG. 2. The current collector plate 14 is the same as the one shown in FIG. 2. The battery element at the left end in FIG. 1 is provided with a current collector plate for connection with the external terminal 29 instead of the current collector plate 14 of the battery element 10 of FIG. 2. The current collector plate 15 is the same as the one shown in FIG. 2.

As described above in detail, with the battery elements 10 of this embodiment, since the current collector plates 14 and 15 are provided with projections 31, the electrode body 13 is unlikely to be deformed when welding connecting portions 16 of adjacent battery elements 10 to each other.

### [Second Embodiment]

Hereinafter, a second embodiment of the present invention will be described in detail with reference to the accompanying drawings. In this embodiment, projections are formed on partitions of the battery case instead of on the current collector plates of battery elements. Parts common to the first embodiment are given the same reference numerals and description thereof will be omitted.

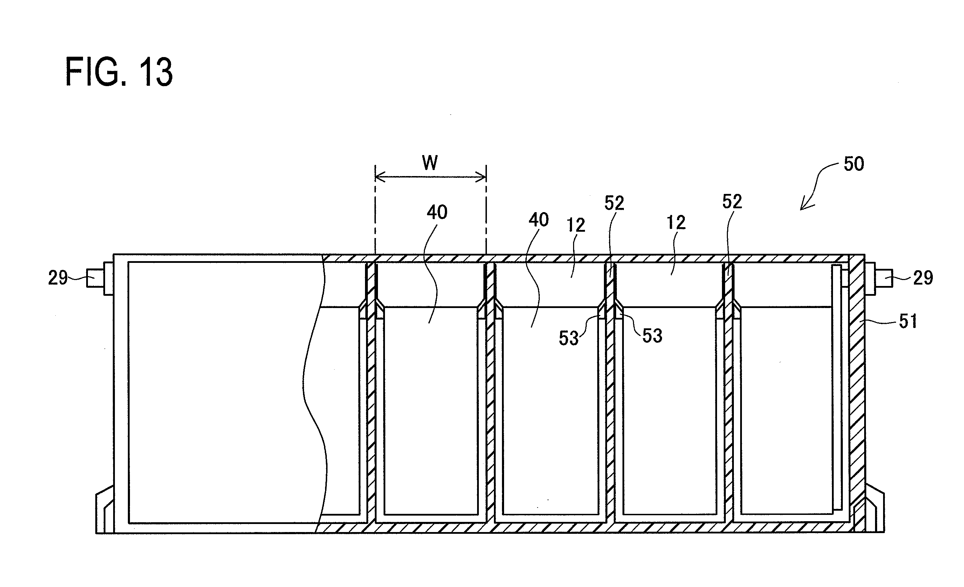

The battery pack of this embodiment includes a plurality of battery modules 50 shown in FIG. 13 stacked upon one another and bound together. The battery module 50 is formed by a plurality of battery elements 40 accommodated in respective storing cavities 12 of a battery case 51. The battery element 40 of this embodiment does not include projections as shown in FIG. 14. The battery element 40 of this embodiment is formed by attaching current collector plates 44 and 45 without projections on both sides of the electrode body 13. Connecting portions 46 are formed in protruded portions 44a and 45a of the current collector plates 44 and 45. The current collector plates 44 and 45 are welded to the electrode body 13 at weld points 47. Namely, it is similar to conventional battery elements.

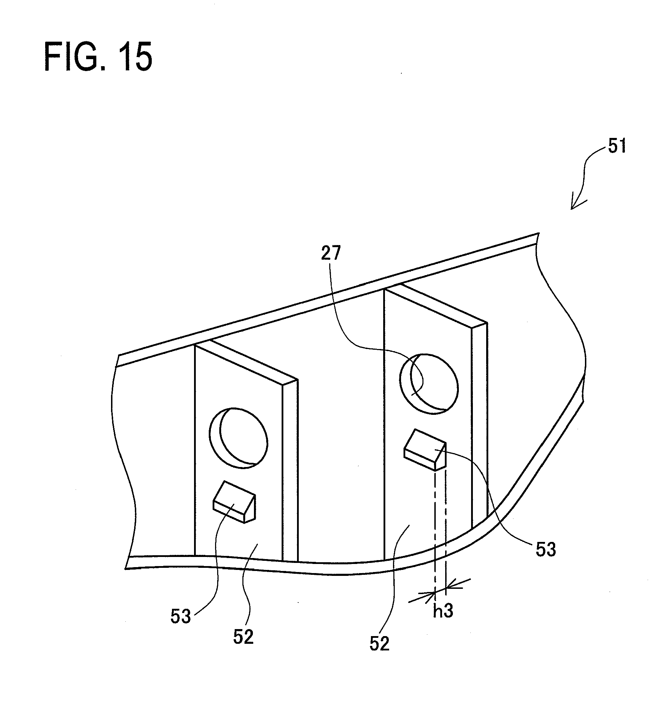

The battery case 51 of this embodiment has partitions 52 formed with through holes 27 similar to those of the first embodiment in an upper part in the drawing of the partitions as shown in FIG. 15. Projections 53 are provided on both sides of the partitions 52 slightly below these through holes 27 in the drawing. Projections 53 of the same shape are formed on the opposite sides in the drawing of the partitions 52.

The projection 53 of this embodiment has its protruding height increased downward in the drawing, i.e., toward the bottom of the battery case 51. Battery elements 40 are inserted from above in the drawing into this battery case 51. Therefore, the height of the projections 53 is increased toward the downstream side of the insertion direction of the battery elements 40. The projection 53 may have any shape at the downstream of the portion with the highest protruding height. With this embodiment, when producing the battery case 51, it may be formed initially in a shape that includes these projections 53.

The projections 53 of this embodiment are disposed at positions where they make contact with areas of current collector plates 44 and 45 facing electrode bodies 13 when battery elements 40 are inserted into respective storing cavities 12 of the battery case 51. Note that the current collector plates 44 and 45 make contact with the projections 53 in an area closer to the connecting portion 46 than the weld point 47 that is the closest to the connecting portion 46. This is the same area as the one in which the projections 31 are positioned in the first embodiment.

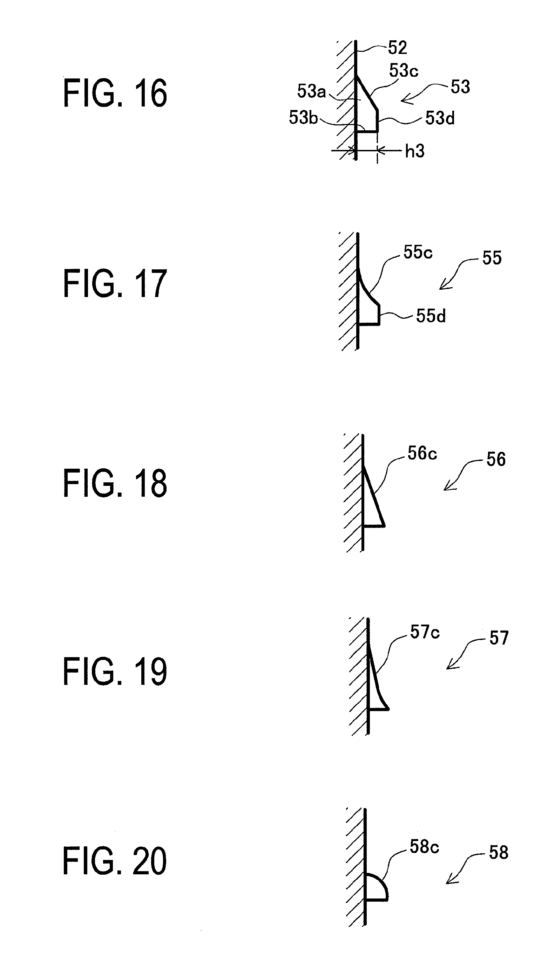

Further, the height h3 (see FIG. 15) in the protruding direction of the projection 53 is set within the range that allows the battery element 40 to be inserted into the battery case 51, as with the height h1 of the projection 31 of the first embodiment. When viewed from a direction parallel to the surface of the current collector plates 44 and 45, the projection 53 of this embodiment appears as shown in FIG. 16. The upper part in the drawing is the side 53a near the through hole 27, and the lower part in the drawing is the side 53b near the bottom of the battery case 51. This drawing shows an example having a flat slope portion 53c. The projection 53 of this embodiment further has a flat surface portion 53d with a height h3 from the surface of the partition 52.

As with those of the first embodiment, as shown in FIGS. 16 to 20, there may be a wide range of variations for the shapes of the slope portion 53c and the like. For example, as shown in FIG. 17, there may be provided a projection 55 having a concave curved slope portion 55c and a flat surface portion 55d. Or, as shown in Fig. 18, there may be provided a projection 56 having a flat slope portion 56c and no flat surface portion. Alternatively, as shown in Fig. 19, there may be provided a projection 57 having a concave curved slope portion 57c and no flat surface portion. Further, as shown in FIG. 20, there may be provided a projection 58 having a convex curved slope portion 58c.

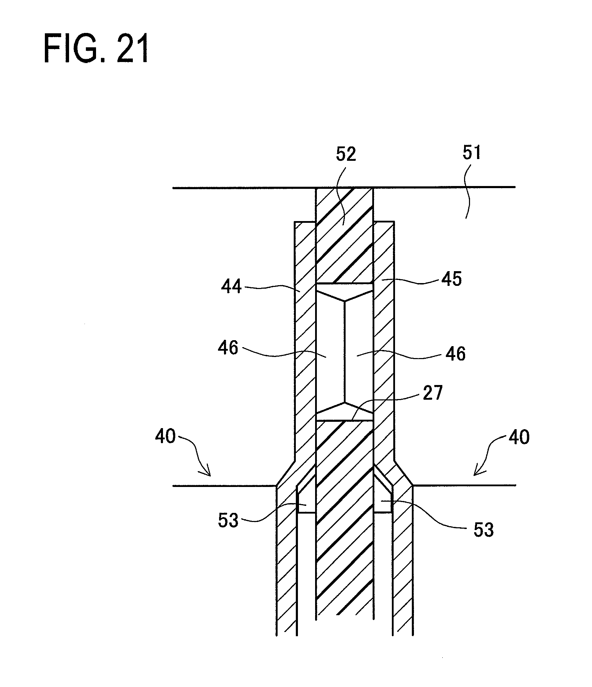

The production method of the battery module 50 when using the battery case 51 of this embodiment is generally the same as the production method of the battery module 20 of the first embodiment. First, battery elements 40 are inserted in between partitions 52 of the battery case 51, and current collector plates 44 and 45 of adjacent battery elements 40 are contacted and welded to each other. Thereby, respective connecting portions 46 of the current collector plates 44 and 45 of adjacent battery elements 40 are connected to each other inside the through hole 27 of the partition 52, as shown in FIG. 21. At this time, even when the current collector plates 44 and 45 are bent in directions away from the electrode body 13, the projections 53 provided to the partitions 52 prevent adverse effects to the electrode body 13.

As described above in detail, with the battery pack of this embodiment, too, the electrode body 13 is unlikely to be deformed when welding connecting portions 46 of adjacent battery elements 40 to each other.

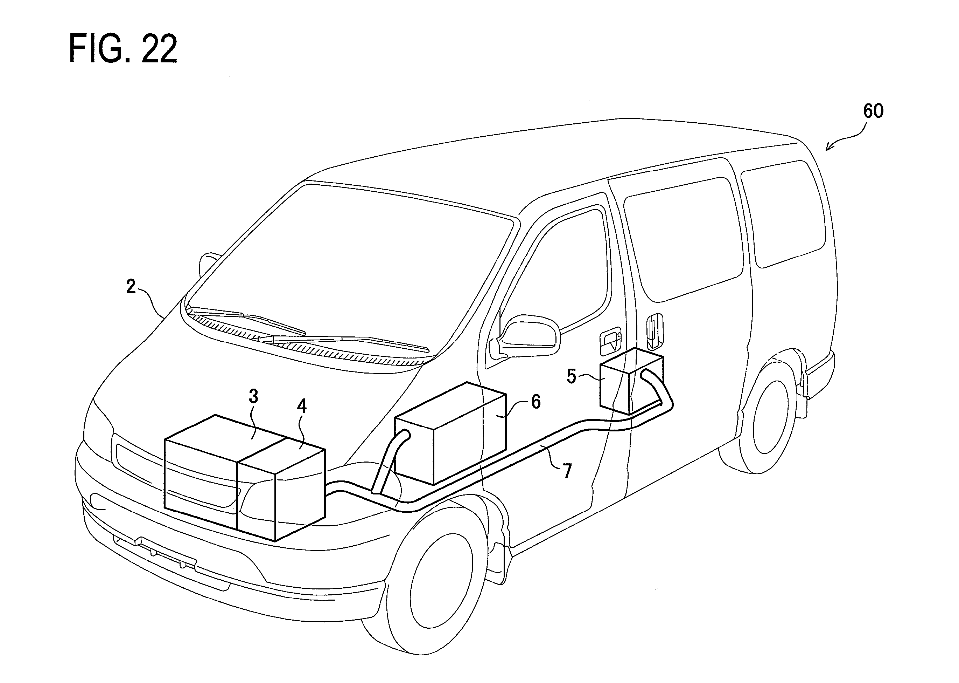

The battery pack of the first or second embodiment can be mounted on a hybrid electric vehicle or other vehicles. FIG. 22 shows a hybrid electric vehicle 60 having the battery pack of this embodiment mounted thereon. This hybrid electric vehicle 60 has an engine 3, a motor 4, a battery pack 5, and a controller 6 mounted on a vehicle body 2. The battery pack 5, motor 4, and controller 6 are connected with a cable 7. The battery pack 5 incorporates a plurality of battery modules.

The hybrid electric vehicle 60 drives its wheels using a combination of the engine 3 and the motor 4. In the hybrid electric vehicle 60 of this embodiment, the discharge current of the batteries is supplied from the battery pack 5 to the motor 4 for the motor 4 to generate power. Depending on the driving condition of the hybrid electric vehicle 60, regenerative power may be generated in the motor 4. Charging current is thereby supplied to the batteries of the battery pack 5 so that the batteries are charged. Here, the controller 6 controls the flows of currents between the battery pack 5 and the motor 4.

The vehicle of this embodiment is not restricted to hybrid electric vehicles and may be any vehicles that use electrical energy by batteries for part or all of their power sources. Examples of such vehicles include electric vehicles, plug-in hybrid electric vehicles, hybrid railway vehicles, fork lifts, electric wheelchairs, electric bicycles, electric scooters.

The above embodiments are mere examples that do not give any limitations to the present invention. Thus, the present invention may be embodied in other specific forms without departing from the essential characteristics thereof.
For instance, in the above embodiments, the current collector plate or battery case is produced to have a shape including the projection during production. Alternatively, the projection may be formed separately from the current collector plate or battery case and then adhered thereto. In this case, the material of the projection is not necessarily the same as those of the current collector plate or battery case and may be selected from materials that do not affect the electrolyte in cooperation with an adhesive. Further, for instance, both the current collector plate and the battery case may be formed with respective projections so as not to interfere with each other. In addition, for instance, the battery element is not restricted to the stacking type described in each of the above embodiments and may be configured as a winding type.

### DESCRIPTION OF THE REFERENCE SIGNS

10, 40 Battery element
11, 52 Partition
12 Storing cavity
14, 15, 44, 45 Current collector plate
14a, 15a, 44a, 45a Protruded portion
16, 46 Connecting portion
17,47 Weld point
21, 51 Battery case
22 Positive electrode plate
23 Negative electrode plate
24 Separator
27 Through hole
31, 34-37, 53, 55-58 Projection
60 Hybrid electric vehicle

## Claims

1. A battery comprising: a battery element having positive and negative electrode plates and separators for insulating these electrode plates; and a battery case provided with a plurality of storing cavities divided by partitions for accommodating battery elements, each of the storing cavities of the battery case accommodating a battery element, wherein
the battery element has a positive current collector plate connected to the positive electrode plates and a negative current collector plate connected to the negative electrode plates on side faces on opposite sides from each other,
part of the positive and negative current collector plates respectively form a protruded portion protruding from an area along the side face of the battery element in an opposite direction from a bottom side of the storing cavities of the battery case,
the partitions of the battery case are formed with a respective hole within an area facing the protruded portions of the positive and negative current collector plates, with the current collector plates of adjacent battery elements being connected to each other through the hole, and
a projection maintaining a distance between the partition and the current collector plate is formed at a position within an area between the hole and a connecting portion between the current collector plate and the electrode plates, at least on one of the partition and the current collector plate.

2. The battery according to claim 1, wherein
the projection is formed to the current collector plate, with its height gradually increasing from a side near the connecting portion toward a side near the hole.

3. The battery according to claim 1, wherein
the projection is formed to the partition, with its height gradually increasing from a side near the hole toward a side near the connecting portion.

4. A battery element having positive and negative electrode plates and separators for insulating these electrode plates, wherein
the battery element includes a positive current collector plate connected to the positive electrode plates and a negative current collector plate connected to the negative electrode plates on side faces on opposite sides from each other,
part of the positive and negative current collector plates respectively forms a protruded portion protruding from an area along the side face of the battery element in the same direction,
the protruded portion is provided with an inter-battery connecting portion for connection with a current collector plate of another battery element,
the current collector plate is formed with a projection protruding in a direction away from the electrode plates at a position within an area between the inter-battery connecting portion and a connecting portion between the current collector plate and the electrode plates.

5. The battery element according to claim 4, wherein
the projection has a height gradually increasing from a side near the connecting portion toward a side near the inter-battery connecting portion.

6. A battery case provided with a plurality of storing cavities divided by partitions, each of the storing cavities being configured to accommodate a battery element to form a battery, the battery element including a positive current collector plate and a negative current collector plate respectively connected to positive and negative electrode plates on side faces on opposite sides from each other, part of these current collector plates forming a protruded portion protruding in the same direction, and the battery element being accommodated such that the protruded portion is oriented oppositely from a bottom side of the battery case,
wherein
the partitions are formed with a respective hole for connection between current collector plates of adjacent battery elements to each other within an area which will face the protruded portions of the positive and negative current collector plates of the battery elements to be accommodated in the storing cavities, and
the partitions are formed with respective projections protruding from the partitions toward inside of the storing cavities at a position within an area between the hole and a portion that will face a connecting portion between the current collector plate and the electrode plates when the battery elements are accommodated in the storing cavities.

7. The battery case according to claim 6, wherein
the projection has a height gradually increasing from a side near the hole toward a side near the portion facing the connecting portion.

8. A method for producing a battery involving insertion of battery elements having positive and negative electrode plates and separators for insulating these electrode plates into respective storing cavities of a battery case provided with a plurality of storing cavities divided by partitions for accommodating battery elements to produce a battery,
wherein the battery element used herein is a battery element including a positive current collector plate connected to the positive electrode plates and a negative current collector plate connected to the negative electrode plates on side faces on opposite sides from each other,
part of the positive and negative current collector plates respectively forming a protruded portion protruding from an area along the side face of the battery element in the same direction,
the protruded portion being provided with an inter-battery connecting portion for connection with a current collector plate of another battery element,
the battery case used herein is a battery case in which the partitions are formed with a respective hole for connection between inter-battery connection portions of adjacent battery elements to each other within an area that will face the protruded portions of the positive and negative current collector plates when the battery elements are accommodated in the storing cavities,
projections for maintaining a distance between the partition and the current collector plate are formed at least at one of a position on the partitions of the battery case used herein within an area between the hole and a portion that will face a connecting portion between the current collector plate and the electrode plates when the battery elements are accommodated in the storing cavities, and a position on the battery elements herein used within an area between the connecting portion between the current collector plate and the electrode plates and the inter-battery connecting portion, and
the method comprises:
inserting the battery elements into respective storing cavities of the battery case from a side opposite from the protruded portions; and
connecting the inter-battery connecting portions of adjacent battery elements to each other via the partitions through the holes of the battery case.

9. The method for producing the battery according to claim 8, wherein
the method uses a battery element having projections formed on the current collector plates with a height gradually increasing from a side near the connecting portion toward a side near the inter-battery connecting portion.

10. The method for producing the battery according to claim 8, wherein
the method uses a battery case having projections on the partitions with a height gradually increasing from a side near the hole toward a side near the portion that will face the connecting portion between the current collector plate and the electrode plates when the battery elements are accommodated in the storing cavities.

11. A vehicle having a battery set forth in one of claims 1 to 3 mounted thereon.
